# EUROPEAN PATENT APPLICATION

(11) **EP 4 414 047 A1**
(43) Date of publication of application: **14.08.2024**
(21) Application number: 23020066.9
(22) Date of filing: 07.02.2023
(51) Int. Cl.: B01D 53/02, B01D 53/04

(54) **METHOD AND APPARATUS FOR SEPARATING A HYDROCARBON MIXTURE BY THERMAL SWING ADSORPTION**

(71) Applicant: Linde GmbH, 82049 Pullach (DE)
(72) Inventor: Salazar Duarte, Gabriel, 82049 Pullach (DE); Kramer, Verena, 82049 Pullach (DE); Stephenson, Neil, 82049 Pullach (DE); Elwell, Courtney, 82049 Pullach (DE); Barrett, Philip, 82049 Pullach (DE)
(74) Representative: Lu, Jing

(57) **Abstract**

A method (100) for treating, using temperature swing adsorption (10), a hydrocarbon mixture containing hydrocarbons with less than five carbon atoms and heavier hydrocarbons including hydrocarbons with five and/or six carbon atoms and hydrocarbons with at least seven carbon atoms is provided, the method (100) comprising forming a process stream (1) from at least a part of said hydrocarbon mixture and passing said process stream through an adsorption vessel (11), the adsorption vessel (11) comprising, in a first adsorption zone (111), a first adsorbent or adsorbent layer (111A) and, in a second adsorption zone (112) downstream of said first adsorption zone (111), a second adsorbent or adsorbent layer (112A), wherein the first adsorbent or adsorbent layer (111A) and the second adsorbent or adsorbent layer (112A) are configured such that the first adsorbent or adsorbent layer (111A) adsorbs at least a major proportion of the hydrocarbons with at least seven carbon atoms from a given amount of the process stream passed trough the adsorption vessel during an adsorption time period and the second adsorbent or adsorbent layer (112A), and wherein the process stream (1) is, while being passed through the adsorption vessel (11), initially depleted in the hydrocarbons with at least seven carbon atoms and not depleted, or depleted to a smaller extent, in the hydrocarbons with five and/or six carbon atoms in the first adsorption zone (111) of the adsorption vessel (11) and then depleted or further depleted in the hydrocarbons with five and/or six carbon atoms in the second adsorption zone (112) of the adsorption vessel (11). A corresponding arrangement is also part of the present invention.

## Description

The present invention relates to a method and an apparatus for treating, using temperature swing adsorption, a hydrocarbon mixture containing hydrocarbons with less than five carbon atoms and heavier hydrocarbons including hydrocarbons with five and/or six carbon atoms as well as hydrocarbons with at least seven carbon atoms.

### Background

The composition and treatment of natural gas is described in expert literature, see e.g. G. Hammer et al., "Natural Gas", Ullmann's Encyclopedia of Industrial Chemistry, online publication 15 July 2006, doi: 10.1002/14356007.a17_073.pub2.

Natural gas typically contains, besides methane as the typical main hydrocarbon component, non-hydrocarbons and heavier hydrocarbons including the so-called natural gas liquid (NGL) and the so-called heavy hydrocarbon (HHC) fractions. Definitions as to the components included in these fractions vary, and the meaning of the term "heavy" or "heavier" hydrocarbons as used herein below is not intended to be limited to any of the specific definitions used in literature.

Recovery of heavier hydrocarbons from natural gas is mainly done for economic reasons, i.o. in order to put the hydrocarbons to an advantageous use. However, removal may also be necessary to avoid uncontrolled formation of hydrocarbon condensates in long-distance pipelines and low-pressure distribution systems. Particularly in liquefaction processes for producing liquefied natural gas (LNG), heavy hydrocarbons are removed in order to meet liquefied natural gas specification. Water and other non-hydrocarbons of raw natural gas are obviously also removed upstream of a liquefaction process. Reference is again made to literature.

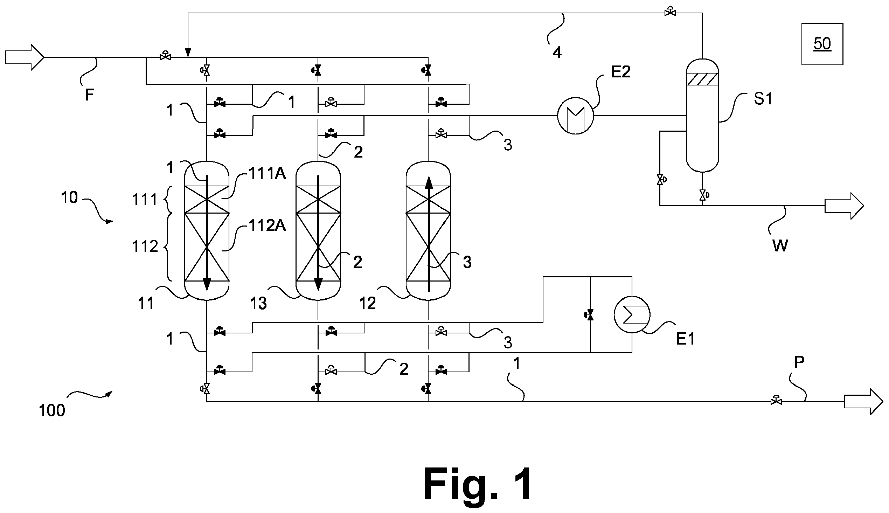

For removal of condensable heavy hydrocarbons or water, a temperature swing adsorption (TSA) process may be used, the process scheme of which is illustrated in Figure 1 and is discussed below. In prior art processes and arrangements, usually hydrocarbons with six and more carbon atoms, in particular hydrocarbons with seven or more carbon atoms, can be removed. For the removal of these hydrocarbons, an adsorbent with high affinity towards these hydrocarbons is usually used, e.g. silica gel, activated alumina, activated carbon or composites thereof.

However, in such prior art hydrocarbon removal processes and arrangements, hydrocarbons with less than seven carbon atoms are not or only partly removed. The present invention has the object of improving treatment, using temperature swing adsorption, a hydrocarbon mixture containing hydrocarbons with less than five carbon atoms and heavier hydrocarbons including hydrocarbons with five and/or six carbon atoms as well as hydrocarbons with at least seven carbon atoms.

### Disclosure of the invention

This object is solved by a method and an apparatus for treating, using temperature swing adsorption, a hydrocarbon mixture containing hydrocarbons with less than five carbon atoms and heavier hydrocarbons including hydrocarbons with five and/or six carbon atoms as well as hydrocarbons with at least seven carbon atoms including the features of the independent claims. Preferred embodiments are the subject of the dependent claims and of the description that follows.

The method for treating, using temperature swing adsorption, a hydrocarbon mixture containing hydrocarbons with less than five carbon atoms and heavier hydrocarbons including hydrocarbons with five and/or six carbon atoms and hydrocarbons with at least seven carbon atoms provided according to embodiments of the present invention comprises forming a process stream from at least a part of said hydrocarbon mixture and passing said process stream through an adsorption vessel. Exemplary temperature ranges used in temperature swing adsorption according to embodiments of the present invention are, without intention to be limiting, in Table 1 below.

The adsorption vessel comprises, in a first adsorption zone, a first adsorbent or adsorbent layer and, in a second adsorption zone downstream of said first adsorption zone, a second adsorbent or adsorbent layer, wherein the first adsorbent or adsorbent layer and the second adsorbent or adsorbent layer are configured such that the first adsorbent or adsorbent layer adsorbs at least a major proportion of the hydrocarbons with at least seven carbon atoms from a given amount of the process stream passed through the adsorption vessel during an adsorption time period and the second adsorbent or adsorbent layer adsorbs at least a major proportion of the hydrocarbons with five and/or six carbon atoms from the given amount of the process stream passed trough the adsorption vessel during the adsorption time period. In embodiments of the present invention, "at least a major proportion" may correspond, for the the hydrocarbons with at least seven carbon atoms and the hydrocarbons with five and/or six carbon atoms each case independently, correspond to a proportion of at least 75%, 80%, 90%, 95%, 99% or 99.99%.

The general inventive concept of the present invention may be realized using different approaches. In other words, such solutions may vary considerably in a manner difficult to define whilst still providing the desired effect.

For example, the first adsorbent or adsorbent layer may be provided to have a smaller retention capacity towards the hydrocarbons with five and/or six carbon atoms and the second adsorbent or adsorbent layer may be provided to have a higher retention capacity towards the hydrocarbons with five and/or six carbon atoms while the retention capacity of the first and second adsorbent or adsorbent layer may, for the hydrocarbons with at least seven carbon atoms, be essentially the same or higher for the first adsorbent or adsorbent layer. The retention capacity of the second adsorbent or adsorbent layer for the hydrocarbons with at least seven carbon atoms may be considered irrelevant if a major proportion of these hydrocarbons with at least seven carbon atoms is essentially already removed in the first adsorbent or adsorbent layer and therefore a minor amount may, irrespective of the adsorption capacity, be adsorbed in the second adsorbent or adsorbent layer.

An "adsorption capacity" is understood herein as the amount of a certain compound or compound group which, under certain adsorption conditions including an adsorption pressure, an adsorption temperature, and a mass flow over an adsorbent or adsorbent layer, may be adsorbed by the adsorbent or adsorbent layer. It may be influenced by said adsorption pressure, adsorption temperature, and mass flow, but also by the type and amount of adsorbent used. The skilled person will readily be able to select adsorbent materials their amount as well as the adsorption capacity such as to provide appropiate adsorbents or adsorbent layers.

The process stream is, according to such embodiments of a method according to the present invention, while being passed through the adsorption vessel, initially depleted in the hydrocarbons with at least seven carbon atoms and not depleted, or depleted to a smaller extent, in the hydrocarbons with five and/or six carbon atoms in the first adsorption zone of the adsorption vessel and then depleted or further depleted in the hydrocarbons with five and/or six carbon atoms in the second adsorption zone of the adsorption vessel.

As mentioned, in heavy hydrocarbon removal techniques using temperature swing adsorption according to the prior art, hydrocarbons with less than seven carbon atoms are not or only partly removed. To increase the removal rate of hydrocarbons with five and/or six carbon atoms, improvements of the technology are therefore necessary. The process proposed by the present invention provides significant advantages in this connection, and also advantages over multilayer systems in which a first layer of an adsorbent adsorbs hydrocarbons with eight and more carbon atoms and a second layer adsorbs the hydrocarbons with up to seven carbon atoms.

The temperature swing adsorption concept provided according to embodiments of the present invention enables an advantageous removal of hydrocarbons with five and more carbon atoms. In this concept, two or more different adsorbents are used in which a first adsorbent is used to remove heavy hydrocarbons comprising seven or more carbon atoms. A gas depleted in these hydrocarbons is then, in embodiments of the present invention, routed to a second adsorbent or adsorbent layer.

Be it noted that the number of adsorption vessels used according to the present invention is not limited and the present invention, in embodiments, may particularly be realized using a plurality of adsorption vessels which are cyclically operated in an adsorption mode and in a regeneration mode, as generally known in the field of temperature swing adsorption. Therefore, if reference is made herein to "a" or "one" adsorption vessel in the singular, this is not intended to be limiting the number of adsorption vessels accordingly. Also the number of adsorbents or adsorbent layers is not limited according to embodiments of the present invention, and, therefore, if a "first" and a "second" adsorbent or adsorbent layer is referred to herein, this does not limit the number of adsorbents or adsorbent layers to two.

From the adsorption vessel, the process gas stream is withdrawn as a hydrocarbon mixture depleted in hydrocarbons with five and more carbon atoms. In embodiments of the present invention, the incremental amount of adsorbent required to remove the hydrocarbons with seven and more carbon atoms versus the removal of hydrocarbons with eight and more carbon atoms (as known from the prior art) in the first adsorbent or adsorbent layer is small, which in turn enables the use of a smaller amount of a second layer of adsorbent to remove the hydrocarbons with five and more carbon atoms. When combined, this layering scheme according to an embodiment of the present invention leads to a smaller overall bed size versus other, alternative layering schemes.

In an embodiment of the present invention, the adsorption vessel is periodically regenerated using thermal energy, particularly using the temperature range examples listed in Table 1, e.g. a temperature in a range from 80 to 350 °C, wherein, in an embodiment, the first and second adsorbents or adsorbent layers are chosen such that an amount of energy required for desorbing the hydrocarbons with at least seven carbon atoms from the first adsorbent or adsorbent layer is lower than an amount of energy required for removing the hydrocarbons with at least seven carbon atoms from the second adsorbent or adsorbent layer.

In other words, according to embodiments of the present invention, the layers are chosen such that the amount of energy required for desorbing hydrocarbons with seven and more carbon atoms from the first layer is lower than the energy required for removing it from the second layer. This novel and preferred arrangement of layering leads to an overall saving in energy demand compared a removal of hydrocarbons with eight and more carbon atoms in the first layer.

In an embodiment of the present invention, the first adsorbent or adsorbent layer is an adsorbent or comprises an adsorbent selected from the group comprising silica gel, modified silica gel, activated alumina, modified activated alumina, activated carbon, a metal organic framework and composites in the form or mixtures including one or more of said adsorbents. In such an embodiment, generally less regeneration energy in the first layer is required.

In an embodiment of the present invention, the first adsorbent or adsorbent layer is configured to selectively remove at least 95%, 99% or 99.99% of the hydrocarbons with at least seven carbon atoms from the process stream while being passed through the first adsorption zone and before being passed through the second adsorption zone. For specific advantages, reference is made to the explanations above.

In an embodiment of the present invention, the second adsorbent or adsorbent layer may likewise be an adsorbent or comprises an adsorbent selected from the group comprising zeolites, silica, alumina, carbons, a metal organic framework and composites in the form of mixtures including one or more of said adsorbents. However, for the second adsorbent or adsorbent layer, particularly such adsorbents comprising a molecular sieve function, such as zeolites are reached.

In an embodiment of the present invention, the second adsorbent or adsorbent layer is configured to remove the hydrocarbons with five and/or six hydrocarbons and remaining hydrocarbons with seven and more carbon atoms to a residual amount, the residual amount being less than or equal to 10 ppm, 1 ppm, or 0.1 ppm. By reaching such low values, corresponding embodiments of the present application are particularly useful for liquefied natural gas plants with not only lean feed gases. Also, an improved membrane protection is achieved thereby.

In an embodiment of the present invention, said treating the natural gas includes performing a membrane separation downstream of said temperature swing adsorption. Embodiments of the present invention provide for a particularly good protection of a membrane used in such a membrane separation.

In an embodiment of the present invention, the hydrocarbon mixture is, or is produced using, natural gas. However, the present invention is not limited to be used with natural gas but can also be used with other gas mixtures, such as biogas.

In an embodiment of the present invention, the hydrocarbon mixture further comprises one or more non-hydrocarbons including at least one of water, carbon dioxide and sulphur compounds, and, using the temperature swing adsorption, said one or more non-hydrocarbons is or are at least in part removed from the process stream. Embodiments of the present invention allow for a particularly effective removal also of such components in one step.

In an embodiment of the present invention, the adsorption vessel comprises, in a third adsorption zone, a third adsorbent or adsorbent layer configured to at least in part remove the one or more non-hydrocarbons. Such a (further) adsorbent or adsorbent layer (or a plurality of further layers) is particularly advantageous as its/their properties can be specifically tailored to remove the non-hydrocarbon(s).

In an embodiment of the present invention, a regeneration gas stream formed when thermally regenerating the adsorption vessel is at least one of expanded in a Joule Thomson valve, chilled in a chiller unit, and washed in a heavy oil wash unit to increase an amount of hydrocarbons knocked out from the regeneration gas stream. This improves effectiveness of the heavy hydrocarbon removal.

In an embodiment of the present invention, the adsorption vessel is internally insulated, whereby the energy demand is further decreased.

In an embodiment of the present invention, the hydrocarbon mixture comprises nitrogen. The invention, in such an embodiment, may be particularly used for treating comparatively nitrogen-rich natural gas or other mixtures, e.g. with a content of 10 to 99.99% of nitrogen. Generally, and independently from the nitrogen content, the hydrocarbon mixture may contain 0.1 to 99.995% of methane, 0.1 to 20% of ethane, 0.1 to 20% of propane(s), 0.005 to 4% of hydrocarbons with five and/or six carbon atoms, and 0.0005 to 2% of hydrocarbons with at least seven carbon atoms, these percent values relating to a total hydrocarbon content. Non-hydrocarbons (including or not including nitrogen) may be contained in an amount from 0.0001 to 99.999%. Generally, the feed gas may contain carbon dioxide in any possible concentration as well as sulfur components.

To again summarize what was said above, in an embodiment of the present invention, the adsorption vessel is one of a plurality of adsorption vessels which is operated in an adsorption mode while at least one further adsorption vessel of the plurality of adsorption vessels is operated in a desorption mode.

An arrangement for treating, using temperature swing adsorption, a hydrocarbon mixture containing hydrocarbons with less than five carbon atoms and heavier hydrocarbons including hydrocarbons with five and/or six carbon atoms and hydrocarbons with at least seven carbon atoms is also part of the present invention, said arrangement comprising an adsorption vessel and means configured to form a process stream from at least a part of said hydrocarbon mixture and to pass said process stream through the adsorption vessel, the adsorption vessel comprising, in a first adsorption zone, a first adsorbent or adsorbent layer and, in a second adsorption zone downstream of said first adsorption zone, a second adsorbent or adsorbent layer. The first adsorbent or adsorbent layer and the second adsorbent or adsorbent layer are configured such that the first adsorbent or adsorbent layer from a given amount of the process stream passed through the adsorption vessel during an adsorption time period adsorbs at least a major proportion of the hydrocarbons with at least seven carbon atoms from a given amount of the process stream passed through the adsorption vessel during an adsorption time period and the second adsorbent or adsorbent layer adsorbs at least a major proportion of the hydrocarbons with five and/or six carbon atoms from the given amount of the process stream passed through the adsorption vessel during the adsorption time period, such that the process stream is, while being passed through the adsorption vessel, initially depleted in the hydrocarbons with at least seven carbon atoms and not depleted, or depleted to a smaller extent, in the hydrocarbons with five and/or six carbon atoms in the first adsorption zone of the adsorption vessel and then depleted or further depleted in the hydrocarbons with five and/or six carbon atoms in the second adsorption zone of the adsorption vessel.

As to features and specific advantages of this arrangement, which preferably is adapted to perform a method as described herein before and embodiments thereof, reference is made to the explanations above. Preferably, this arrangement comprises means adapted to perform a method as described before.

Further features of the invention are described in connection with the appended figure depicting apparatus according to a preferred embodiment.

### Short description of the figures

Figure 1 illustrates a method according to an embodiment of the invention.

### Embodiments of the invention

In Figure 1, a method according to an embodiment of the present invention is schematically illustrated in the form of a simplified process flow diagram and is indicated 100. Herein, if reference is made to method steps, the corresponding explanations likewise relate to apparatus features and vice versa.

The method 100 includes using a temperature swing adsorption 10, i.e. a corresponding process arrangement, wherein the temperature swing adsorption 10 is performed, in the specific example shown, using three adsorption vessels 11, 12, 13, preferably of an identical construction, as process units. The adsorption vessels 11, 12, 13 are configured with adsorption zones 111 and 112 as illustrated only for vessel 11 for reasons of conciseness. The Figures are not drawn to scale and, therefore, the displayed ratios of the adsorption zones 111 and 112 are only exemplary and should not be taken as indication of the ratios according to the invention. As mentioned, the adsorption vessels 11, 12, 13 may be cyclically operated in adsorption and regeneration modes and the present invention is not limited to the specific number and/or operation of the vessels. The explanations below, relating adsorption vessel 11, are likewise applicable to the other adsorption vessels 12, 13 when they are operated in an adsorption mode.

The temperature swing adsorption 10 or, more precisely, the switching between adsorption and regeneration modes, is controlled by a control unit schematically illustrated with a block 50. Figure 1 shows a snapshot of the operation of the temperature swing adsorption arrangement 10 in which adsorption vessel 11 is in an adsorption mode, adsorption vessel 12 is heated to desorb adsorbed components and adsorption vessel 13 is cooled in order to be prepared for a subsequent adsorption mode. Heating and cooling are phases of a regeneration of the adsorption vessels 12, 13. In Figure 1, a plurality of valves is shown, of which closed valves are symbolized by a black filling while open valves are symbolized by a transparent or white filling. As mentioned, the adsorption vessels 11, 12, 13 are cyclically switched between these modes, in order to be able to perform a continuous operation.

In the method 100, a process gas stream 1 is formed from a feed stream F which is a hydrocarbon mixture containing hydrocarbons with less than five carbon atoms and heavier hydrocarbons including hydrocarbons with five and/or six carbon atoms and hydrocarbons with at least seven carbon atoms. The process stream 1 is passed through adsorption vessel 11 which comprises, like the other adsorption vessels 12, 13, in a first adsorption zone 111, a first adsorbent or adsorbent layer 111A and, in a second adsorption zone 112 downstream of said first adsorption zone (111), a second adsorbent or adsorbent layer 112A.

The first adsorbent or adsorbent layer 111A and the second adsorbent or adsorbent layer (112A) are configured such that the first adsorbent or adsorbent layer (111A) adsorbs at least a major proportion of the hydrocarbons with at least seven carbon atoms from a given amount of the process stream passed trough the adsorption vessel during an adsorption time period and the second adsorbent or adsorbent layer 112A adsorbs at least a major proportion of the hydrocarbons with five and/or six carbon atoms from the given amount of the process stream passed trough the adsorption vessel during the adsorption time period, such that the process stream 1 is, while being passed through the adsorption vessel 11, initially depleted in the hydrocarbons with at least seven carbon atoms and not depleted or depleted to a smaller extent in the hydrocarbons with five and/or six carbon atoms in the first adsorption zone 111 of the adsorption vessel 11. Thereafter, the process stream 1 is depleted or further depleted in the hydrocarbons with five and/or six carbon atoms in the second adsorption zone 112 of the adsorption vessel 11.

The process gas stream 1 thus depleted in the hydrocarbons with at least seven carbon atoms and the hydrocarbons with five and/or six carbon atoms is, in the example illustrated, withdrawn from the method 100 as a product stream P.

For cooling the adsorption vessel 13, a gas stream 2 is also formed from the feed stream F. This gas stream 2 "pushes out" heat from the adsorption vessel 13 during an initial phase of the heating and is thereafter heated to a first temperature level using a first heat exchanger E1 which is conventionally typically a fired heater. The gas stream 2, which is now indicated 3, is then introduced passed through the adsorption vessel 12 in reverse direction where it desorbs the hydrocarbons with at least seven carbon atoms and the hydrocarbons with five and/or six carbon atoms previously adsorbed. To knock out these hydrocarbons, the gas stream 3 is, in the example shown, cooled using a cooler E2 and/or treated as explained above, e.g. expanded and/or oil washed. The actual knock-out of the hydrocarbons with at least seven carbon atoms and the hydrocarbons with five and/or six carbon atoms is performed in a separator vessel S1 and the hydrocarbons knocked out are withdrawn as a stream W. A stream 4 remaining after the knock out is recycled, as illustrated.

Table 1 lists typical regeneration temperatures for three different exemplary adsorbents (Silica gel, NaX zeolite and CaX zeolite). The temperature ranges are the result of heavy hydrocarbon dosing experiments via thermogravimetric analysis (TGA) to evaluate hydrocarbon desorption profiles.

**Table 1**

| **Heavy Hydrocarbon (HHC)** | **Dosed Adsorbent Type** | **Temperature Range with Maximum HHC Removal** (°C) |
|---|---|---|
| Pentane | NaX Zeolite | 120 - 168 |
| | CaX Zeolite | 120 - 187 |
| Hexane | NaX Zeolite | 160 - 210 |
| | CaX Zeolite | 143 - 225 |
| Heptane | NaX Zeolite | 194 - 250 |
| | CaX Zeolite | 180 - 261 |
| Nonane | Silica Gel | 89 - 168 |
| Decane | Silica Gel | 106 - 180 |

Advantageous temperature ranges, based on the type of hydrocarbon present, therefore include:
1. From nonane and decane dosing experiments with silica gel, the recommended adsorbent regeneration temperature ranges are from 89 °C to 168 °C for nonane and 106 °C to 180 °C for decane.
2. From pentane, hexane and heptane dosing experiments with NaX, the recommended adsorbent regeneration temperature ranges are from 120 °C to 168 °C for pentane, 160 °C to 210 °C for hexane and 194 °C to 250 °C for heptane.
3. From pentane, hexane and heptane dosing experiments with CaX, the recommended adsorbent regeneration temperature range are from 120 °C to 187 °C for pentane, 143 °C to 225 °C for hexane and 180 °C to 261 °C for heptane.
4. In scenarios where a mixture of heavy hydrocarbons have been adsorbed by a given material, the recommended adsorbent regeneration temperatures are in the range of the heaviest hydrocarbon within the mixture, if possible (e.g. for an adsorbent with pentane, hexane and heptane, the temperature range for heptane should be used).

## Claims

1. A method (100) for treating, using temperature swing adsorption (10), a hydrocarbon mixture containing hydrocarbons with less than five carbon atoms and heavier hydrocarbons including hydrocarbons with five and/or six carbon atoms and hydrocarbons with at least seven carbon atoms, the method (100) comprising forming a process stream (1) from at least a part of said hydrocarbon mixture and passing said process stream through an adsorption vessel (11), the adsorption vessel (11) comprising, in a first adsorption zone (111), a first adsorbent or adsorbent layer (111A) and, in a second adsorption zone (112) downstream of said first adsorption zone (111), a second adsorbent or adsorbent layer (112A), wherein the first adsorbent or adsorbent layer (111A) and the second adsorbent or adsorbent layer (112A) are configured such that the first adsorbent or adsorbent layer (111A) adsorbs at least a major proportion of the hydrocarbons with at least seven carbon atoms from a given amount of the process stream passed through the adsorption vessel during an adsorption time period and the second adsorbent or adsorbent layer (112A) adsorbs at least a major proportion of the hydrocarbons with five and/or six carbon atoms from the given amount of the process stream passed through the adsorption vessel during the adsorption time period, and wherein the process stream (1) is, while being passed through the adsorption vessel (11), initially depleted in the hydrocarbons with at least seven carbon atoms and not depleted, or depleted to a smaller extent, in the hydrocarbons with five and/or six carbon atoms in the first adsorption zone (111) of the adsorption vessel (11) and then depleted or further depleted in the hydrocarbons with five and/or six carbon atoms in the second adsorption zone (112) of the adsorption vessel (11).

2. The method (100) according to claim 1, wherein the adsorption vessel (11) is periodically regenerated using thermal energy in a temperature range from 80 to 350 °C, wherein the first and second adsorbents or adsorbent layers (111A, 112A) are particularly chosen such that an amount of energy required for desorbing the hydrocarbons with at least seven carbon atoms from the first adsorbent or adsorbent layer (111A) is lower than an amount of energy required for removing the hydrocarbons with at least seven carbon atoms from the second adsorbent or adsorbent layer (112A).

3. The method (100) according to claim 1 or 2, wherein the first adsorbent or adsorbent layer (111A) is an adsorbent or comprises an adsorbent selected from the group comprising silica gel, modified silica gel, activated alumina, modified activated alumina, activated carbon, a metal organic framework and composites in the form or mixtures including one or more of said adsorbents.

4. The method (100) according to any one of the preceding claims, wherein the first adsorbent or adsorbent layer (111A) is configured to selectively remove at least 95%, 99% or 99.99% of the hydrocarbons with at least seven carbon atoms from the process stream (1) while being passed through the first adsorption zone (111) and before being passed through the second adsorption zone (112).

5. The method (100) according to any one of the preceding claims, wherein the second adsorbent or adsorbent layer (112A) is an adsorbent or comprises an adsorbent selected from the group comprising zeolites, silica, alumina, carbons, a metal organic framework and composites in the form or mixtures including one or more of said adsorbents.

6. The method (100) according to any one of the preceding claims, wherein the second adsorbent or adsorbent layer (112A) is configured to remove the hydrocarbons with five and/or six hydrocarbons and remaining hydrocarbons with seven and more carbon atoms to a residual amount, the residual amount being less than or equal to 10 ppm, 1 ppm, or 0.1 ppm.

7. The method (100) according to any one of the preceding claims, wherein said treating the natural gas includes performing a membrane separation downstream of said temperature swing adsorption (10).

8. The method (100) according to any one of the preceding claims, wherein the hydrocarbon mixture is, or is produced using, natural gas.

9. The method (100) according to any one of the preceding claims, wherein the hydrocarbon mixture further comprises one or more non-hydrocarbons including at least one of water, carbon dioxide and sulphur compounds, and wherein, using the temperature swing adsorption (10), said one or more non-hydrocarbons is or are at least in part removed from the process stream (1).

10. The method (100) according to claim 9, the adsorption vessel (11) comprising, in a third adsorption zone, a third adsorbent or adsorbent layer configured to at least in part remove the one or more non-hydrocarbons.

11. The method (100) according to any one of the preceding claims, wherein a regeneration gas stream formed when thermally regenerating the adsorption vessel (11) is at least one of expanded in a Joule Thomson valve, chilled in a chiller unit, and washed in a heavy oil wash unit to increase an amount of hydrocarbons knocked out from the regeneration gas stream.

12. The method (100) according to any one of the preceding claims, wherein the adsorption vessel is internally insulated.

13. The method (100) according to any one of the preceding claims, wherein the hydrocarbon mixture comprises nitrogen.

14. The method (100) according to any one of the preceding claims, wherein the adsorption vessel (11) is one of a plurality of adsorption vessels (11, 12, 13) which is operated in an adsorption mode while at least one further adsorption vessel (12) of the plurality of adsorption vessels (11, 12, 13) is operated in a desorption mode.

15. An arrangement for treating, using temperature swing adsorption (10), a hydrocarbon mixture containing hydrocarbons with less than five carbon atoms and heavier hydrocarbons including hydrocarbons with five and/or six carbon atoms and hydrocarbons with at least seven carbon atoms, said arrangement comprising an adsorption vessel (11) and means configured to form a process stream (1) from at least a part of said hydrocarbon mixture and to pass said process stream through the adsorption vessel (11), the adsorption vessel (11) comprising, in a first adsorption zone (111), a first adsorbent or adsorbent layer (111A) and, in a second adsorption zone (112) downstream of said first adsorption zone (111), a second adsorbent or adsorbent layer (112A), wherein the first adsorbent or adsorbent layer (111A) and the second adsorbent or adsorbent layer (112A) are configured such that the first adsorbent or adsorbent layer (111A) adsorbs at least a major proportion of the hydrocarbons with at least seven carbon atoms from a given amount of the process stream passed through the adsorption vessel during an adsorption time period and the second adsorbent or adsorbent layer (112A) adsorbs at least a major proportion of the hydrocarbons with five and/or six carbon atoms from the given amount of the process stream passed through the adsorption vessel during the adsorption time period, such that the process stream (1) is, while being passed through the adsorption vessel (11), initially depleted in the hydrocarbons with at least seven carbon atoms and not depleted, or depleted to a smaller extent, in the hydrocarbons with five and/or six carbon atoms in the first adsorption zone (111) of the adsorption vessel (11) and then depleted or further depleted in the hydrocarbons with five and/or six carbon atoms in the second adsorption zone (112) of the adsorption vessel (11).
